# EUROPEAN PATENT SPECIFICATION

(11) **EP 1 415 237 B1**
(45) Date of publication and mention of the grant of the patent: **01.12.2010**
(21) Application number: 02750043.8
(22) Date of filing: 15.07.2002
(51) Int. Cl.: G06F 15/173, G06F 9/46, H04L 12/18

(54) **METHOD AND APPARATUS FOR MULTICAST SUPPORT**
VERFAHREN UND VORRICHTUNG ZUR MULTICAST-UNTERSTÜTZUNG
PROCEDE ET APPAREIL PERMETTANT LA MULTI-DIFFUSION

(30) Priority: 16.07.2001 US 305985 P; 29.08.2001 US 942504
(43) Date of publication of application: 06.05.2004
(73) Proprietor: BEA Systems, Inc., San Jose, CA 95131 (US)
(72) Inventor: CHANG, Shean-Guang, Morris Plains, NJ 07950 (US); ZACHWIEJA, Stephan, Lebanon, NJ 08833 (US)
(74) Representative: Davies, Simon Robert
(86) International application number: PCT/US2002/022408
(87) International publication number: WO 2003/009161

(56) References cited:
- WO-A-98/39868
- US-A- 5 519 704
- US-A1- 2001 043 603
- US-A1- 2002 044 567
- US-A1- 2002 099 854
- US-A1- 2002 118 638
- US-A1- 2002 118 644
- US-B1- 6 189 039

## Description

### TECHNICAL FIELD

The invention relates generally to enterprise messaging systems and specifically to a system and a method for concurrently offering multiple qualities of service from a single messaging source.

### BACKGROUND

The Java Message Service ("JMS") Application Programming Interface ("API"), part of the Java^{™} 2 Platform, Enterprise Edition ("J2EE") produced by Sun Microsystems, Inc. of Palo Alto, California, is a software interface that is useful in accessing enterprise messaging systems. JMS provides the ability for applications to send and receive data asynchronously, by defining a common enterprise messaging API supported by several major enterprise messaging products. JMS supports both message queueing and subscription-based messaging. Enterprise Java beans, components well known to those skilled in the computer arts, use the JMS API to send enterprise messages and receive them either synchronously or asynchronously.

The JMS API does not provide end-to-end synchronous message delivery and notification. Other messaging systems can provide synchronous delivery as a mechanism for implementing reliable applications, or can provide clients with delivery notification if messages are not received. The JMS API, on the other hand, provides only a guaranteed single delivery of messages. The JMS API does not utilize system messages, such as delivery notifications. Any notification must be done at the application level.

Further, JMS does not offer true multicasting services. JMS offers only a simple "Acknowledge" mode, which allows a user to subscribe to specific "topics," or messages arranged or grouped such as by subject. JMS does not provide the capability to specify selection criteria or filter out locally-produced messages. Multicast is not supported for queue consumers or durable consumers. Further, multicast itself is based on an unreliable protocol, such that messages can be lost. Using the "one time only" sending of messages with the JMS API would mean that these lost messages could not be recovered. This may be undesirable to some users.

In other synchronous queuing systems of the prior art, it is typically necessary to have one API for queuing and reliable transport. These systems usually have to continuously de-queue in order to get all the incoming messages. If a user wished to also receive multicast traffic, it would be necessary to use a different API. In such a raw mode, it is necessary to read a socket, then queue, then the socket, then queue, etc. The system would need to be able to handle both at the same time, having to do the multiplexing and time slicing itself. The developer would also have to understand and program for two different APIs. Even if the developer is not doing the raw multicasting at the operating system level, the developer typically wraps the system with customized APIs. If it is desired to receive a different quality of service, it will be necessary to switch APIs altogether.

It is therefore desirable to develop a messaging system that utilizes the advantages of multicasting, but also offers improved reliability to those users who do not wish to lose messages.

It is also desirable to develop such a messaging system that functions without the need for separate APIs.

### BRIEF SUMMARY

The present invention includes a system and method for providing two qualities of service from a single data stream. A storage space is used to store a first quality of service choice and/or a second quality of service choice for each user of the system. A processor of the system is programmed to direct the data stream, and/or any messages on the data stream, for each user, according to that user's quality of service choice. The system contains multicasting apparatus for receiving the data stream from the processor and multicasting the data stream to each user for whom the first quality of service choice is stored. The system also contains a device, such as a point-to-point device, for receiving the data stream from the processor and ensuring that each user for whom the second quality of service is stored receives the data stream and/or messages.

### BRIEF DESCRIPTION OF THE DRAWINGS

Figure 1 is a diagram of a system in accordance with one embodiment of the present invention demonstrating a point-to-point quality of service for each user.

Figure 2 is a diagram of a system in accordance with one embodiment of the present invention demonstrating a multicast quality of service for each user.

Figure 3 is a diagram of a system in accordance with one embodiment of the present invention demonstrating both qualities of service.

Figure 4 is a diagram of a system in accordance with one embodiment of the present invention demonstrating both qualities of service.

Figure 5 is a diagram of a system in accordance with one embodiment of the present invention demonstrating both qualities of service.

Figure 6 is a flowchart showing steps of a messaging process in accordance with one embodiment of the present invention.

### DETAILED DESCRIPTION

The present invention overcomes many of the deficiencies of prior art messaging systems. Messaging systems of the prior art, such as the JMS API, typically establish a source of information to be broadcast. Users of these systems publish information to this source, which is then used for broadcasting. The source and publication in this method are, however, fairly unreliable. It is up to users of these systems to develop and implement their own retransmission schemes if the users to not wish to miss messages. Document US 6 189 039 describes a method by which a user can request a data stream. If the stream is available via IP multicast, the user will receive it via IP multicast, if not the stream will be sent via IP unicast.

A system in accordance with the present invention can instead send messages to a server that will do a multicast. This server cannot only provide the multicasting service, which is described as unreliable above, but can also offer a reliable service. These services can operate concurrently or sequentially, and can alternate services for each message. Unlike prior art systems, such a system is not configured as either a multicast or a reliable source alone, but offers both services through the same channel.

In one embodiment, a user can specify the quality of service ("QoS") to be used for messages sent to, or received by, that user. Each user of the system can have associated attributes, one of which is quality of service. For users selecting a higher quality of service, additional information may be provided, such as a message being sent to inform those users of a message being multicast. Some users may configure or enable a source to be multicastable, while other subscribers may want reliability and do not wish to miss any messages. A system in accordance with one embodiment of the present invention is actually servicing both user communities with different qualities of service from a single source. This dual servicing may be completely transparent to users of either QoS.

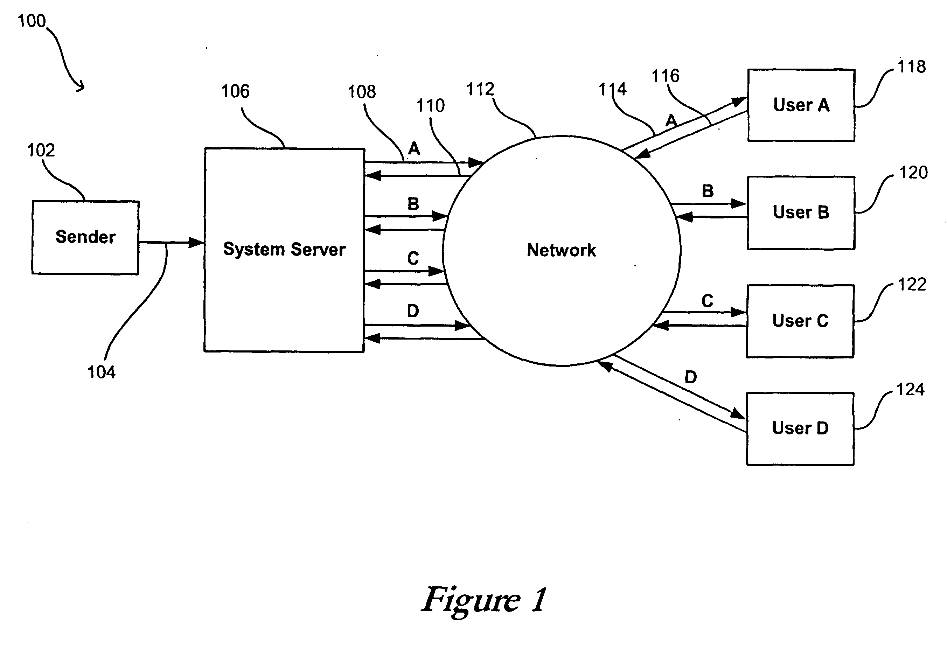

**Figure 1** shows a system **100** in accordance with the present invention, in which each user **118, 120**, **122, 124** has selected a reliable quality of service, in this case utilizing a point-to-point protocol. In **Figure 1****,** a sender **102** sends a single message along a data stream **104** to a system server **106.** The system server **106** sends the message **108** to the network **112,** which delivers the message **114** to User A **118,** who has selected to receive messages by the reliable quality of service. User A **118** sends a response **116** back to the network **112,** which delivers an acknowledgment of receipt **110** to the system server **106.** The system server **106** also follows these steps for User B **120,** User C **122,** and User D **124.** These steps may be followed for multiple users serially, in parallel, or concurrently, and may be done in any appropriate order among the users.

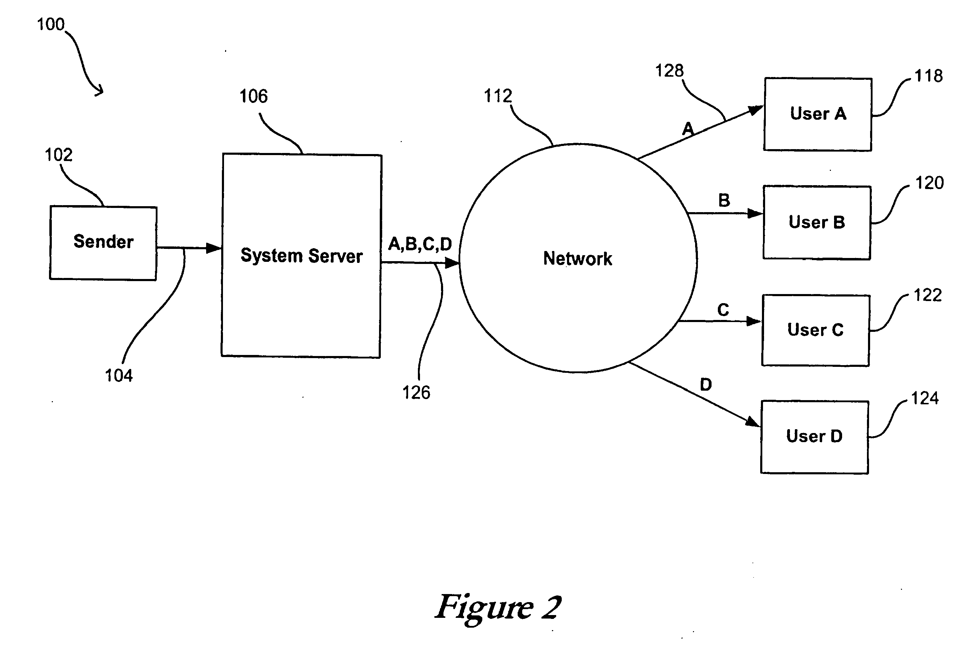

**Figure 2** shows the same system **100,** in which each user **118, 120, 122, 124** has selected a faster but less reliable quality of service, in this case utilizing a multicast protocol. In **Figure 2****,** the sender **102** sends a single message along the data stream **104** to the system server **106.** The system server **106** sends a single message **126** to the network **112,** which delivers the message **114** to User A **118,** User B **120,** User C **122,** and User D **124,** who have selected to receive messages by the less reliable quality of service. For this quality of service, the users **118, 120, 122, 124** do not send a response that needs to be received by the system server **106.** Each user may receive the message at approximately the same time, but is not ensured of getting the message.

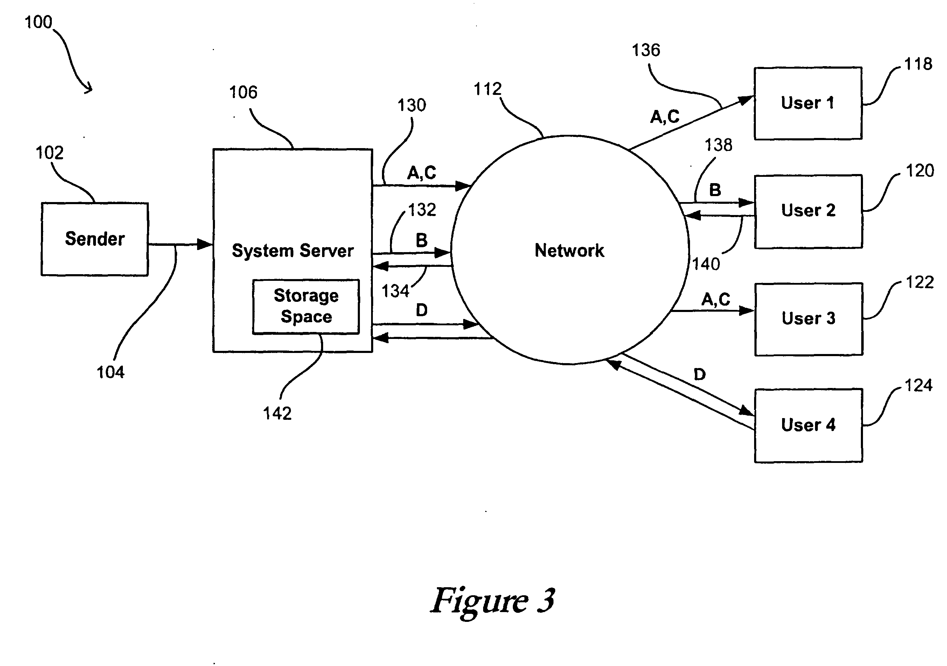

In **Figure 3****,** the sender **102** again sends a single message along the data stream **104** to the system server **106.** The system server **106** looks to a storage space **142,** such as volatile or runtime memory for temporary storage, to determine which users have selected the reliable quality of service and which users have selected the less reliable quality of service.

For User A **118** and User C **122,** the system server **106** sends a single message **130** to the network **112,** which delivers the message **136** to User A **118** and User C **122,** who have selected to receive messages by the less reliable quality of service. For this quality of service, User A **118** and User C **122** do not send a response that needs to be received by the system server **106.** User A **118** and User C **122** may receive the message **136** at approximately the same time, but they are not ensured of getting the message.

The system server **106** also sends the message **132** to the network **112,** which delivers the message **138** to User B **120,** who has selected to receive messages by the reliable quality of service. User B **120** sends a response **140** back to the network **112,** which delivers an acknowledgment of receipt **134** to the system server **106.** The system server **106** also undergoes the reliable process for User D **124.**

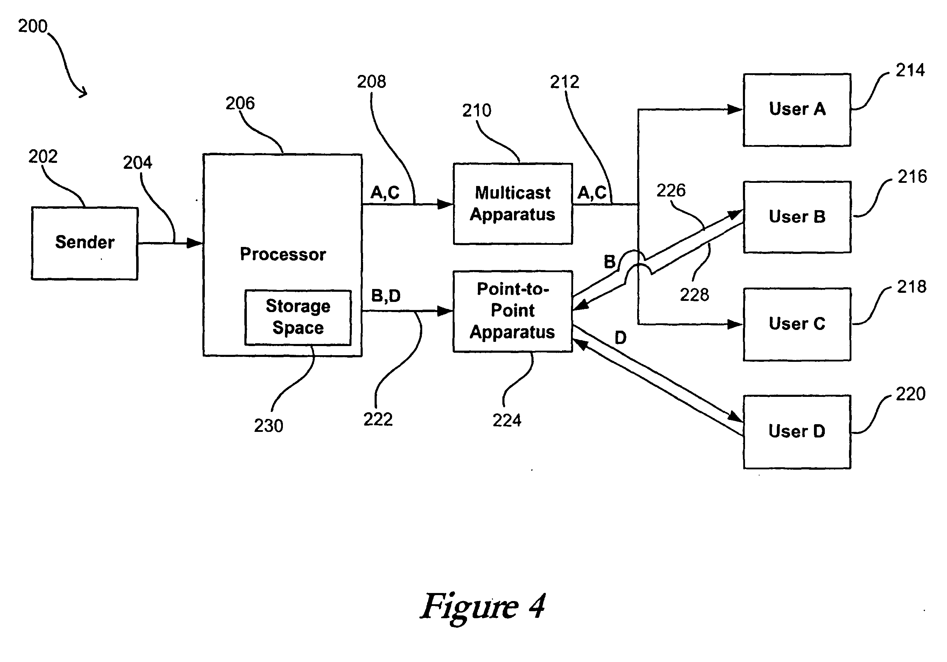

**Figure 4** shows another system **200** in accordance with one embodiment of the present invention. The sender **202** sends a single message along a data stream **204** to a system processor **206.** The system processor **206** looks to a storage space **230,** such as runtime or volatile memory for temporary storage, to determine which users have selected the reliable quality of service and which users have selected the less reliable quality of service. For User A **214** and User C **218,** the system processor **206** sends a single message **208** to a multicast apparatus **210,** which delivers the message **212** to User A **214** and User C **218,** who have selected to receive messages by the less reliable quality of service. For this quality of service, User A **214** and User C **218** do not send a response. User A **214** and User C **218** may receive the message **212** at approximately the same time, but they are not ensured to get the message **212.**

The system processor **206** also sends the message **222** to a point-to-point apparatus **224,** which delivers the message **226** to User B **216,** who has selected to receive messages by the reliable quality of service. User B **216** then sends a response **228** back to the point-to-point apparatus **224.** The point-to-point apparatus **224** also undergoes the point-to-point process for User D **220.** When implementing multicast and point-to-point distribution, multicast can be initiated or scheduled before, after, or at the same time as point-to-point. The individual tasks for the two distribution methods can compete for resources and can be executed in any order and/or at the same time.

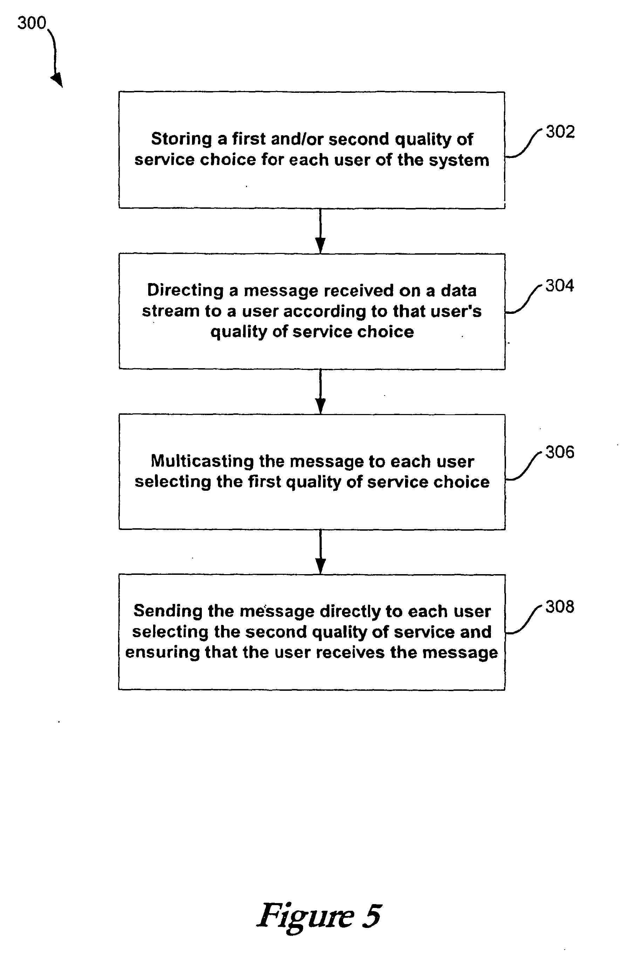

**Figure 5** shows the same system **200,** except that this time User B **216** has selected to receive messages by both qualities of service. This may be appropriate, for example, when users wish to receive messages quickly, such as by the unreliable QoS, but also wish to ensure that they receive all the messages, thereby requesting that messages also be sent by the reliable QoS. For User A **214 ,** User B **216,** and User C **218,** the system processor **206** sends a single message **208** to a multicast apparatus **210,** which delivers the message **232** to User A **214 ,** User B **216,** and User C **218,** who have selected to receive messages by the less reliable quality of service. The system processor **206** also sends the message **222** to a point-to-point apparatus **224,** which delivers the message **226** to User B **216** and User D **220,** who have selected to receive messages by the reliable quality of service. User B **216** sends a response **228** back to the point-to-point apparatus **224** for the reliable service only.

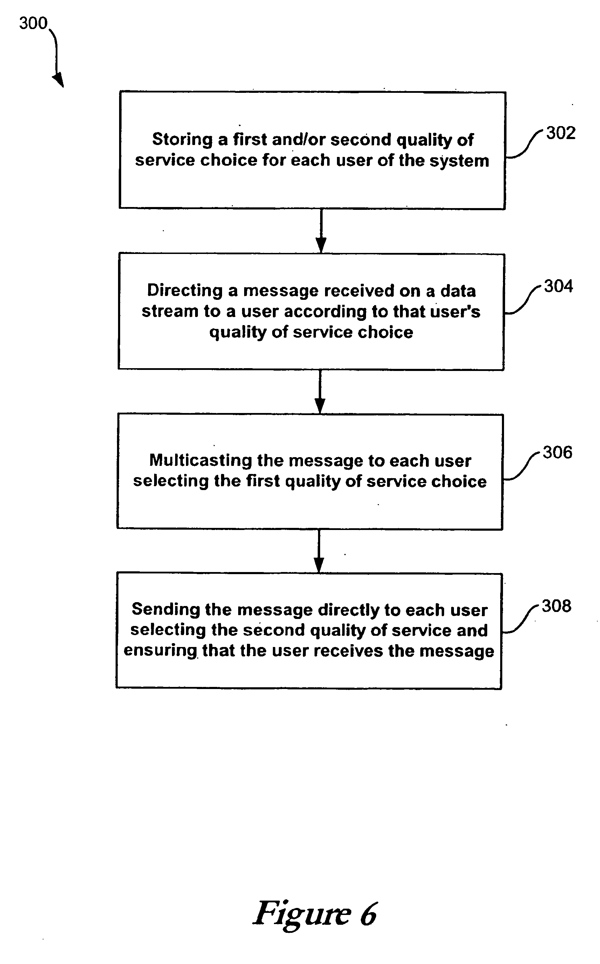

For both the system of Figure 1 and the system of Figure 4, a process **300** may be used in accordance with the present invention that is shown in **Figure 6****.** In the process, a first and/or second quality of service choice is stored for each user of the system, or at least for each user who has selected to receive a message from that sender **302.** A message received on a data stream is directed to each user according to that user's quality of service choice **304.** For users selecting the first quality of service choice, the message is multicast to each such user at approximately the same time **306.** For users selecting the second quality of service, the messages are sent individually to each such user and it is ensured that each user receives the message **308.**

One reason why some users may prefer the multicast approach is that there are some penalties are inherent in the fully reliable service. One such penalty involves the diminution of overall system performance. The overall performance of the system may be diminished. The fully reliable service is typically both slower and less scalable than the multicasting system. When multicasting, a message is sent only once no matter how many subscribers exist. Multicast messages can be delivered via a routine such as an onMessage routine. Users can create consumers in their multicast session and register listeners for those consumers. Messages from the consumers may then be serialized across the session just like other asynchronous messages.

Another reason for preferring the multicast approach lies in the fact that some applications are very sensitive to any delivery time latency. Applications can also be sensitive to the order in which different receivers obtain a message. To get a message later than another receiver can be a big disadvantage, while receiving a message earlier can be a big advantage. When using multicast, these applications and receivers get messages at approximately the same time, such that there is almost no problem with latency and/or ordering issues.

In the reliable case, it can be necessary to contact, and wait on, each subscriber. It may be impracticable to scale to large numbers when using the reliable system, as the service may require a handshake to guarantee that all subscribers have received the data. If this approach is used for a sufficiently large number of users, the system may not be able to keep up with a heavy messaging load.

A system in accordance with one embodiment of the present invention avoids these problems by offering a QoS choice to the user. A user or server having a message to be broadcast may only need to send each message to the system once. The system can handle both qualities of service for that message. One embodiment segregates the user list into two groups, one for each quality of service. These groups may be maintained in any appropriate storage manner, such as in volatile or runtime memory for temporary storage or in a system database for systems or applications requiring more persistent storage.

The system can also do client-side filtering rather than server-side filtering. This can improve the performance of the system by moving some of the functionality from the server to the client. Filtering can be done on the client side such as by JMS, before the message is given to an application. While the filtering is done on the client side, it is JMS and not the application that is in control of filtering. In the case of point-to-point delivery, the filtering can also be done on the server side by JMS. When a message arrives at a client, by either QoS, the client or user can always choose to filter the message out at that time. Various methods of message filtering may be used, such as are known and used in the art.

As discussed above, the JMS API allows a user to specify the level of handshaking, such as a level using "Acknowledge" mode. In Acknowledge mode, the user can choose to acknowledge all, some, or none of the incoming messages. Acknowledge mode is the switch as far as the user is concerned, and a listener can be used to receive the messages. When the multicast is set to "No Acknowledge" mode, it may not be necessary to actually change the way in which the messages are received. A client is still handed messages one at a time, so nothing typically needs to be done in order to receive message without having to acknowledge.

In prior art systems, it would be necessary to change the program APIs in order to change the QoS. A customer may have subscribers who prefer multicast and subscribers who prefer more reliable service, but would prefer not to have to create and manage two APIs in order to accommodate both groups.

In a system in accordance with the present invention, a user can simply set one parameter and receive the messages using the desired QoS. In this system, there is a thread of execution for multicast subscribers. The thread of execution can comprise a program running in the background that listens on a user's behalf. When a message arrives on a multicast stream, the message can be packaged like a normal JMS message and delivered to the listener. Whenever the message arrives, the listener can be invoked, such as through a callback.

For reliable subscribers, a server can call the client directly. In such a case, the server can hand the message directly to the client, then package and deliver the message to the listener as well. Both messages can come into the listener. A program, such as a small "grab back" program, may be used to catch the messages and hand them to the clients. In this manner, the messages can look the same to the client.

A permanent listener can be put on the service for a user. Whenever a message arrives, it can be queued up for a regular listener that has been set up by the user. A thread of execution can listen continually to the input stream or socket, putting any received message in the queue. In the JMS sense, there is a single-ordered stream of messages coming in, or a "session." A session in the JMS sense is a multicast session created by specifying an "Acknowledge" mode.

Within a session, a user can express interest in multiple input streams. If all these streams are multicast streams, there may be only one socket and only one thread that listens on that socket. When a message is received, it can be delivered to the user in a way that the user may differentiate the source of the message. A user can also create multiple sessions, in order to have multiple threads listening. In fact, a user can have a dedicated thread for each topic, if the user so chooses, each thread residing on a dedicated socket.

If a user has multiple sources of information, the user can choose to hear everything and sort it out later. The user can also choose to only listen to one or two sources. Each source can be configured to use a separate medium. A user can choose to set up several topics on one socket or "multicast group." If the user is only interested in one topic, it may be necessary to throw away all of the other topics coming at the user.

While processing one message, it is possible to miss another message. The system may be able to tell the user that a message was missed. Internally, each message can be tagged with a sequence number. If JMS detects that a message has been lost, it can report that there has been a sequence gap.

The multicast protocol also does not guarantee ordering. If messages are received out of order, this can be detected and reported as a sequence gap. Sequence gaps are reported by delivering an exception such as a SequenceGapException to an exception listener, such as ExceptionListener. If the session does not have an exception listener, such as may be set using an setExceptionListener() method, no sequence gaps may be reported.

In one type of sequence gap, there is no way to get the message back. In a second type of sequence gap, the user may be receiving a long stream of information, such that a packet of information in the middle of a message can be missed, resulting in a corrupted message. In one embodiment in accordance with the present invention, the first packet of such a message contains information relating to the message, such as the origin of the message, the length of the message, a message id, header properties, etc. The initial packet can be called upon to report some or all of this information to the user.

Every incoming message can also be tagged with information such that it is possible to know from which data stream the message is coming. Messages from different streams are not really competing with each other such that they would kill off one another when the traffic gets heavy. There can, however, be physical problems with the ethernet. The server may keep a buffer for recent messages, so the server can request them if they are missed.

For example, a system might use a routine or method to preserve a message stream by dropping a newer message, such as a KeepOld method. This may be desirable for applications that are more efficient in handling messages in a single stream. A system might also use a routine or method such as KeepNew, which can preserve a newer message by dropping an older message. This may be desirable for applications that are more efficient in handling messages that are repeated, but contain more timely information.

Depending on the amount of processing required for each multicast message, a client could easily fall behind. In this scenario, messages can start to pile up on the client. A new attribute, such as MessagesMaximum, can be added to limit the number of unprocessed messages that a given session can have outstanding. For a multicast session, messages can be thrown away once the client reaches the a maximum message threshold. Valid values for a message maximum can be, for example, -1 and/or in the range of 1 to 2³¹-1. A value of -1 can indicate that there is no limit on the number of unprocessed messages that can accumulate on the session.

When messages are thrown away as a result of exceeding the maximum message value, they can be thrown away according to defined criteria, such as may be contained in a method or parameter, such as an overrun policy or OverrunPolicy. Valid values for OverrunPolicy can be, for example, 'KeepOld' and 'KeepNew'. Both the message maximum and overrun policy can be configured via connection factories, and can be overridden on a per session basis using, for example, methods in a class such as weblogic.jms.extension.WLSession.

The foregoing description of preferred embodiments of the present invention has been provided for the purposes of illustration and description. It is not intended to be exhaustive or to limit the invention to the precise forms disclosed. Obviously, many modifications and variations will be apparent to the practitioner skilled in the art. The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims.

## Claims

1. A system for providing two qualities of service from a single data stream, **characterized by**:
(a) a storage space (230) for storing at least one of a first quality of service choice and a second quality of service choice for each of a plurality of users;
(b) a processor (206) programmed to direct the data stream for each user according to that user's quality of service choice;
(c) multicasting apparatus (210) for receiving the data stream from the processor and multicasting the data stream to all users for which the first quality of service choice is stored in said storage space; and
(d) a point-to-point device (224) for receiving the data stream from the processor and ensuring that each user for which the second quality of service is stored in said storage space receives the data stream by sending it directly to each user.

2. A system according to claim 1, further comprising a listener adapted to listen for information sent in the data stream to one of the users of the system.

3. A system according to claim 1, further comprising a single API for providing instructions to the processor for both qualities of service.

4. A system according to claim 1, further comprising a thread of execution for each user selecting the multicast quality of service, the thread of execution listening on the user's behalf for a message on the multicast stream then delivering the message to the user.

5. A system according to claim 2, further comprising a queue for each listener, allowing a user to receive messages for both qualities of service.

6. A system according to claim 1, wherein said storage space may store separate choices for each user for multiple data streams.

7. A system according to claim 1, further comprising a filtering device allowing a user to filter out certain messages in the data stream.

8. A method for allowing a user to select a quality of service for message delivery, **characterized by**:
(a) storing at least one of a first quality of service choice and a second quality of service choice for each user of the system;
(b) processing each message received on a data stream using a single API and redirecting the message for each user according to that user's quality of service choice;
(c) multicasting the message to users selecting the first quality of service; and
(d) sending the message directly to each user selecting the second quality of service and ensuring that the user receives the message.

9. A method according to claim 8, further comprising the step of filtering the messages received by a user by either quality of service.

10. A method according to claim 8, further comprising the step of providing a listener for each user to listen for messages on the user's behalf.

11. A method according to claim 8, further comprising the step of queuing messages sent to a user by either quality of service to be delivered one by one to the user.

12. A method according to claim 8, further comprising the step of tagging each message with a sequence number so that a user can tell if a message has been missed.

13. A method according to claim 8, further comprising the step of tagging each message so that a user can tell the data stream from which the message was received.

14. A method according to claim 9, further comprising the step of allowing a user to select filtering criteria to be used for the filtering.

15. A method for providing two qualities of service from a single data stream, **characterized by**:
(a) storing at least one of a first quality of service choice and a second quality of service choice for each of a plurality of users;
(b) directing each message received on the data stream for each user according to that user's quality of service choice;
(c) multicasting the message to all users selecting the first quality of service; and
(d) sending the message directly to each user selecting the second quality of service and ensuring that the user receives the message.

16. A method according to claim 15, further comprising the step of filtering the messages received by a user by either quality of service.

17. A method according to claim 15, further comprising the step of providing a listener for each user to listen for messages on the user's behalf.

18. A method according to claim 15, further comprising the step of queuing messages sent to a user by either quality of service to be delivered one by one to the user.

19. A method according to claim 15, further comprising the step of tagging each message with a sequence number so that a user can tell if a message has been missed.

20. A method according to claim 15, further comprising the step of tagging each message so that a user can tell the data stream from which the message was received.

21. A computer-readable medium, **characterized by**:
(a) means for storing at least one of a first quality of service choice and a second quality of service choice for each user of a system;
(b) means for processing each message received on a data stream using a single API and redirecting the message for each user according to that user's quality of service choice;
(c) means for multicasting the message to all users selecting the first quality of service; and
(d) means for sending the message directly to each user selecting the second quality of service and ensuring that the user receives the message.

22. A computer program product for execution by a server computer for allowing a user to select a quality of service for message delivery, **characterized by**:
(a) computer code for storing at least one of a first quality of service choice and a second quality of service choice for each user of a system;
(b) computer code for processing each message received on a data stream using a single API and redirecting the message for each user according to that user's quality of service choice;
(c) computer code for multicasting the message to all users selecting the first quality of service; and
(d) computer code for sending the message directly to each user selecting the second quality of service and ensuring that the user receives the message.

23. A system for allowing a user to select a quality of service for message delivery, **characterized by**:
(a) means for storing (230) at least one of a first quality of service choice and a second quality of service choice for each user of a system;
(b) means for processing (206) each message received on a data stream using a single API and redirecting the message for each user according to that user's quality of service choice;
(c) means for multicasting (210) the message to all users selecting the first quality of service; and
(d) means for sending (224) the message directly to each user selecting the second quality of service and ensuring that the user receives the message.

24. A computer system **characterized by**:
a processor;
object code executed by said processor, said object code configured to:
(a) store at least one of a first quality of service choice and a second quality of service choice for each user of a system;
(b) process each message received on a data stream using a single API and redirecting the message for each user according to that user's quality of service choice;
(c) multicast the message to all users selecting the first quality of service; and
(d) send the message directly to each user selecting the second quality of service and ensuring that the user receives the message.

## Patentansprüche

1. System zum Bereitstellen zweier Dienstqualitäten aus einem einzigen Datenstrom, **gekennzeichnet durch**:
(a) einen Speicherplatz (230) zum Speichern mindestens einer Auswahl einer ersten Dienstqualität oder einer Auswahl einer zweiten Dienstqualität für jeden aus einer Mehrzahl von Benutzern,
(b) einen Prozessor (206), der so programmiert ist, dass er den Datenstrom für jeden Benutzer gemäß der Dienstqualitätsauswahl dieses Benutzers richtet,
(c) eine Multicasting-Einrichtung (210) zum Empfangen des Datenstroms von dem Prozessor und zum Multicasten des Datenstroms an alle Benutzer, für die die Auswahl der ersten Dienstqualität in dem Speicherplatz gespeichert ist und
(d) eine Punkt-zu-Punkt-Einrichtung (224) zum Empfangen des Datenstroms von dem Prozessor und zum Sicherstellen, dass jeder Benutzer, für den die zweite Dienstqualitätsauswahl in dem Speicherplatz gespeichert ist, den Datenstrom empfängt **durch** Senden davon direkt an jeden Benutzer.

2. System nach Anspruch 1 darüber hinaus mit einem Listener, der so eingerichtet ist, dass er Information, die in dem Datenstrom an einen der Benutzer des Systems gesendet wird, abhört.

3. System nach Anspruch 1 darüber hinaus mit einem einzigen API zum Bereitstellen von Befehlen an den Prozessor für beide Dienstqualitäten.

4. System nach Anspruch 1 darüber hinaus mit einem Ausführungsthread für jeden Benutzer, der die Multicastdienstqualität auswählt, wobei der Ausführungsthread im Namen des Benutzers nach einer Nachricht auf dem Multicaststrom Ausschau hält und dann die Nachricht an den Benutzer liefert.

5. System nach Anspruch 2 darüber hinaus mit einer Warteschlange für jeden Listener, die es einem Benutzer ermöglicht, Nachrichten für beide Dienstqualitäten zu empfangen.

6. System nach Anspruch 1, wobei der Speicherplatz getrennte Auswahlen für jeden Benutzer für mehrere Datenströme speichern kann.

7. System nach Anspruch 1 darüber hinaus mit einer Filtereinrichtung, die es einem Benutzer ermöglicht, bestimmte Nachrichten in dem Datenstrom herauszufiltern.

8. Verfahren, um es einem Benutzer zu ermöglichen, eine Dienstqualität für eine Nachrichtenübermittlung auszuwählen, **gekennzeichnet durch**:
(a) Speichern mindestens einer Auswahl einer ersten Dienstqualität oder einer Auswahl einer zweiten Dienstqualität für jeden Benutzer des Systems,
(b) Verarbeiten jeder auf einem Datenstrom empfangenen Nachricht, wobei ein einziger API verwendet wird und Weiterleiten der Nachricht für jeden Benutzer gemäß der Auswahl der Dienstqualität für diesen Benutzer,
(c) Multicasten der Nachricht an Benutzer, die die erste Dienstqualität ausgewählt haben,und
(d) Senden der Nachricht direkt an jeden Benutzer, der die zweite Dienstqualität ausgewählt hat, und Sicherstellen, dass der Benutzer die Nachricht empfängt.

9. Verfahren nach Anspruch 8 darüber hinaus mit dem Schritt des Filterns der von einem Benutzer für beide Dienstqualitäten empfangenen Nachrichten.

10. Verfahren nach Anspruch 8 darüber hinaus mit dem Schritt des Bereitstellens eines Listeners für jeden Benutzer, um Nachrichten im Namen des Benutzers abzufangen.

11. Verfahren nach Anspruch 8 darüber hinaus mit dem Schritt des Einreihens von Nachrichten in eine Warteschlange, die in irgendeiner Dienstqualität an einen Benutzer gesendet wurden, so dass sie nacheinander an den Benutzer bereitgestellt werden.

12. Verfahren nach Anspruch 8 darüber hinaus mit dem Schritt des Markierens jeder Nachricht mit einer Sequenznummer, so dass ein Benutzer feststellen kann, ob eine Nachricht ausgelassen wurde.

13. Verfahren nach Anspruch 8 darüber hinaus mit dem Schritt des Markierens jeder Nachricht, so dass ein Benutzer den Datenstrom feststellen kann, von dem die Nachricht empfangen wurde.

14. Verfahren nach Anspruch 9 darüber hinaus mit dem Schritt, es einem Benutzer zu ermöglichen, für die Filterung zu verwendende Filterkriterien auszuwählen.

15. Verfahren zum Bereitstellen zweier Dienstqualitäten von einem einzigen Datenstrom, **gekennzeichnet durch**:
(a) Speichern mindestens einer ersten Auswahl an Dienstqualität oder einer zweiten Auswahl an Dienstqualität für jeden aus einer Mehrzahl von Benutzern,
(b) Leiten jeder auf dem Datenstrom empfangenen Nachricht für jeden Benutzer gemäß einer Dienstqualitätsauswahl für diesen Benutzer,
(c) Multicasten der Nachricht an alle Benutzer, die die erste Dienstqualität ausgewählt haben, und
(d) Senden der Nachricht direkt an jeden Benutzer, der die zweite Dienstqualität ausgewählt hat, und Sicherstellen, dass der Benutzer die Nachricht empfängt.

16. Verfahren nach Anspruch 15 darüber hinaus mit dem Schritt des Filterns der von einem Benutzer in irgendeiner Dienstqualität empfangenen Nachrichten.

17. Verfahren nach Anspruch 15 darüber hinaus mit dem Schritt des Bereitstellens eines Listeners für jeden Benutzer, um im Namen des Benutzers Nachrichten abzuhören.

18. Verfahren nach Anspruch 15 darüber hinaus mit dem Schritt des Einstellens von Nachrichten in eine Warteschlange, die an einen Benutzer mit irgendeiner Dienstqualität gesendet wurden, so dass sie nacheinander an den Benutzer bereitgestellt werden.

19. Verfahren nach Anspruch 15 darüber hinaus mit dem Schritt des Markierens jeder Nachricht mit einer Sequenznummer, so dass ein Benutzer feststellen kann, wenn eine Nachricht ausgelassen wurde.

20. Verfahren nach Anspruch 15 darüber hinaus mit dem Schritt des Markierens jeder Nachricht, so dass ein Benutzer den Datenstrom, von dem die Nachricht empfangen wurde, feststellen kann.

21. Computerlesbares Medium **gekennzeichnet durch**:
(a) ein Mittel zum Speichern mindestens einer ersten Dienstqualitätsauswahl oder einer zweiten Dienstqualitätsauswahl für jeden Benutzer eines Systems,
(b) ein Mittel zum Verarbeiten jeder auf einem Datenstrom empfangenen Nachricht, wobei ein einziger API verwendet wird und Weiterleiten der Nachricht für jeden Benutzer gemäß der Dienstqualitätsauswahl dieses Benutzers,
(c) ein Mittel zum Multicasten der Nachricht an alle Benutzer, die die erste Dienstqualität ausgewählt haben, und
(d) ein Mittel zum Senden der Nachricht direkt an jeden Benutzer, der die zweite Dienstqualität ausgewählt hat, und Sicherstellen, dass der Benutzer die Nachricht empfängt.

22. Computerprogrammprodukt zum Ausführen durch einen Servercomputer, um es einem Benutzer zu ermöglichen, eine Dienstqualität für eine Nachrichtenbereitstellung auszuwählen, **gekennzeichnet durch**:
(a) einen Computercode zum Speichern mindestens einer ersten Dienstqualitätsauswahl oder einer zweiten Dienstqualitätsauswahl für jeden Benutzer des Systems,
(b) einen Computercode zum Verarbeiten jeder auf einem Datenstrom empfangenen Nachricht, wobei ein einziger API verwendet wird, und Weiterleiten der Nachricht für jeden Benutzer gemäß der Dienstqualitätsauswahl dieses Benutzers,
(c) einen Computercode zum Multicasten der Nachricht an alle Benutzer, die die erste Dienstqualität ausgewählt haben, und
(d) einen Computercode zum Senden der Nachricht direkt an jeden Benutzer, der die zweite Dienstqualität ausgewählt hat, und Sicherstellen, dass der Benutzer die Nachricht erhält.

23. System, um es einem Benutzer zu ermöglichen, eine Dienstqualität zur Nachrichtenbereitstellung auszuwählen, **gekennzeichnet durch**:
(a) ein Mittel zum Speichern (230) mindestens einer ersten Dienstqualitätsauswahl oder einer zweiten Dienstqualitätsauswahl für jeden Benutzer eines Systems,
(b) ein Mittel zum Verarbeiten (206) jeder auf einem Datenstrom empfangenen Nachricht, wobei ein einziger API verwendet wird, und Weiterleiten der Nachricht für jeden Benutzer gemäß der Dienstqualitätsauswahl dieses Benutzers,
(c) ein Mittel zum Multicasten (210) der Nachricht an alle Benutzer, die die erste Dienstqualität ausgewählt haben, und
(d) ein Mittel zum Senden (224) der Nachricht direkt an jeden Benutzer, der die zweite Dienstqualität ausgewählt hat, und Sicherstellen, dass der Benutzer die Nachricht erhält.

24. Computersystem **gekennzeichnet durch**:
einen Prozessor,
einen Objektcode, der von dem Prozessor ausgeführt wird, wobei der Objektcode so eingerichtet ist, dass:
(a) mindestens eine erste Dienstqualitätsauswahl oder eine zweite Dienstqualitätsauswahl für jeden Benutzer eines Systems gespeichert wird,
(b) jede von einem Datenstrom empfangene Nachricht verarbeitet wird, wobei ein einziger API verwendet wird, und die Nachricht für jeden Benutzer gemäß der Dienstqualitätsauswahl dieses Benutzers weitergeleitet wird,
(c) die Nachricht an alle Benutzer multicastet wird, die die erste Dienstqualität ausgewählt haben, und
(d) die Nachricht direkt an jeden Benutzer gesendet wird, der die zweite Dienstqualität ausgewählt hat, und Sicherstellen, dass der Benutzer die Nachricht empfängt.

## Revendications

1. Système pour fournir deux qualités de service à partir d'un unique flux de données, **caractérisé par** :
(a) un espace de mémoire (230) pour stocker au moins un premier choix de qualité de service et un deuxième choix de qualité de service pour chacun d'une pluralité d'utilisateurs ;
(b) un processeur (206) programmé pour orienter le flux de données pour chaque utilisateur en fonction du choix de qualité de service de cet utilisateur ;
(c) un dispositif de multidiffusion (210) pour recevoir le flux de données à partir du processeur et effectuer la multidiffusion du flux de données à tous les utilisateurs pour lesquels le premier choix de qualité de service est stocké dans ledit espace de mémoire ; et
(d) un dispositif point à point (224) pour recevoir le flux de données à partir du processeur et garantir que chaque utilisateur pour lequel la deuxième qualité de service est stocké dans ledit espace de mémoire reçoive le flux de données en l'envoyant directement à chaque utilisateur.

2. Système selon la revendication 1, comprenant en outre un écouteur adapté pour écouter des informations envoyées dans le flux de données à l'un des utilisateurs du système.

3. Système selon la revendication 1, comprenant en outre une interface API unique pour fournir des instructions au processeur pour les deux qualités de service.

4. Système selon la revendication 1, comprenant en outre un fil d'exécution pour chaque utilisateur sélectionnant la qualité de service de multidiffusion, le fil d'exécution écoutant pour le compte de l'utilisateur un message sur le flux de multidiffusion en délivrant ensuite le message à l'utilisateur.

5. Système selon la revendication 2, comprenant en outre une file d'attente pour chaque écouteur, permettant à l'utilisateur de recevoir des messages pour les deux qualités de service.

6. Système selon la revendication 1, dans lequel ledit espace de mémoire peut stocker des choix distincts pour chaque utilisateur pour de multiples flux de données.

7. Système selon la revendication 1, comprenant en outre un dispositif de filtrage permettant à un utilisateur d'éliminer par filtrage certains messages dans le flux de données.

8. Procédé pour permettre à un utilisateur de sélectionner une qualité de service pour la fourniture de messages, **caractérisé par** :
(a) le stockage d'au moins un premier choix de qualité de service et un deuxième choix de qualité de service pour chaque utilisateur du système ;
(b) le traitement de chaque message reçu sur un flux de données en utilisant une interface API unique et en réacheminant le message pour chaque utilisateur en fonction du choix de qualité de service de cet utilisateur ;
(c) la multidiffusion du message aux utilisateurs sélectionnant la première qualité de service ; et
(d) l'envoi du message directement à chaque utilisateur sélectionnant la deuxième qualité de service et la garantie que l'utilisateur reçoive le message.

9. Procédé selon la revendication 8, comprenant en outre l'étape consistant à filtrer les messages reçus par un utilisateur par l'une ou l'autre qualité de service.

10. Procédé selon la revendication 8, comprenant en outre l'étape consistant à fournir un écouteur pour chaque utilisateur pour écouter des messages pour le compte de l'utilisateur.

11. Procédé selon la revendication 8, comprenant en outre l'étape consistant à mettre en file d'attente des messages envoyés à un utilisateur, par l'une ou l'autre qualité de service, et destinés à être délivrés un par un à l'utilisateur.

12. Procédé selon la revendication 8, comprenant en outre l'étape consistant à étiqueter chaque message avec un numéro de séquence de manière qu'un utilisateur puisse dire si un message a été manqué.

13. Procédé selon la revendication 8, comprenant en outre l'étape consistant à étiqueter chaque message de manière qu'un utilisateur puisse dire le flux de données à partir duquel le message a été reçu.

14. Procédé selon la revendication 9, comprenant en outre l'étape consistant à permettre à un utilisateur de sélectionner des critères de filtrage à utiliser pour le filtrage.

15. Procédé pour fournir deux qualités de service à partir d'un unique flux de données, **caractérisé par** :
(a) le stockage d'au moins un premier choix de qualité de service et un deuxième choix de qualité de service pour chacun d'une pluralité d'utilisateurs ;
(b) l'orientation de chaque message reçu sur le flux de données pour chaque utilisateur en fonction du choix de qualité de service de cet utilisateur ;
(c) la multidiffusion du message à tous les utilisateurs sélectionnant la première qualité de service ; et
(d) l'envoi du message directement à chaque utilisateur sélectionnant la deuxième qualité de service et la garantie que l'utilisateur reçoive le message.

16. Procédé selon la revendication 15, comprenant en outre l'étape consistant à filtrer les messages reçus par un utilisateur par l'une ou l'autre qualité de service.

17. Procédé selon la revendication 15, comprenant en outre l'étape consistant à fournir un écouteur pour chaque utilisateur pour écouter des messages pour le compte de l'utilisateur.

18. Procédé selon la revendication 15, comprenant en outre l'étape consistant à mettre en file d'attente des messages envoyés à un utilisateur, par l'une ou l'autre qualité de service, et destinés à être délivrés un par un à l'utilisateur.

19. Procédé selon la revendication 15, comprenant en outre l'étape consistant à étiqueter chaque message avec un numéro de séquence de manière qu'un utilisateur puisse dire si un message a été manqué.

20. Procédé selon la revendication 15, comprenant en outre l'étape consistant à étiqueter chaque message de manière qu'un utilisateur puisse dire le flux de données à partir duquel le message a été reçu.

21. Support lisible par ordinateur, **caractérisé par** :
(a) des moyens pour stocker au moins un premier choix de qualité de service et un deuxième choix de qualité de service pour chaque utilisateur d'un système ;
(b) des moyens pour traiter chaque message reçu sur un flux de données en utilisant une interface API unique et en réacheminant le message pour chaque utilisateur en fonction du choix de qualité de service de cet utilisateur ;
(c) des moyens pour effectuer la multidiffusion du message à tous les utilisateurs sélectionnant la première qualité de service ; et
(d) des moyens pour envoyer le message directement à chaque utilisateur sélectionnant la deuxième qualité de service et garantir que l'utilisateur reçoive le message.

22. Produit de programme d'ordinateur pour l'exécution par un ordinateur de serveur pour permettre à un utilisateur de sélectionner une qualité de service pour la fourniture de messages, **caractérisé par** :
(a) un code d'ordinateur pour stocker au moins un premier choix de qualité de service et un deuxième choix de qualité de service pour chaque utilisateur d'un système ;
(b) un code d'ordinateur pour traiter chaque message reçu sur un flux de données en utilisant une interface API unique et en réacheminant le message pour chaque utilisateur en fonction du choix de qualité de service de cet utilisateur ;
(c) un code d'ordinateur pour effectuer la multidiffusion du message à tous les utilisateurs sélectionnant la première qualité de service ; et
(d) un code d'ordinateur pour envoyer le message directement à chaque utilisateur sélectionnant la deuxième qualité de service et garantir que l'utilisateur reçoive le message.

23. Système pour permettre à un utilisateur de sélectionner une qualité de service pour la fourniture de messages, **caractérisé par** :
(a) des moyens pour stocker (230) au moins un premier choix de qualité de service et un deuxième choix de qualité de service pour chaque utilisateur d'un systeme ;
(b) des moyens pour traiter (206) chaque message reçu sur un flux de données en utilisant une interface API unique et en réacheminant le message pour chaque utilisateur en fonction du choix de qualité de service de cet utilisateur ;
(c) des moyens pour effectuer la multidiffusion (240) du message à tous les utilisateurs sélectionnant la première qualité de service ; et
(d) des moyens pour envoyer (224) le message directement à chaque utilisateur sélectionnant la deuxième qualité de service et garantir que l'utilisateur reçoive le message.

24. Système informatique **caractérisé par** :
un processeur ;
un code objet exécuté par ledit processeur, ledit code objet étant configuré pour :
(a) le stockage d'au moins un premier choix de qualité de service et un deuxième choix de qualité de service pour chaque utilisateur d'un système ;
(b) le traitement de chaque message reçu sur un flux de données en utilisant une interface API unique et en réacheminant le message pour chaque utilisateur en fonction du choix de qualité de service de cet utilisateur ;
(c) la multidiffusion du message à tous les utilisateurs sélectionnant la première qualité de service ; et
(d) l'envoi du message directement à chaque utilisateur sélectionnant la deuxième qualité de service et la garantie que l'utilisateur reçoive le message.
